# EUROPÄISCHE PATENTANMELDUNG

(11) **EP 2 202 003 A1**
(43) Veröffentlichungstag der Anmeldung: **30.06.2010**
(21) Anmeldenummer: 09174889.7
(22) Anmeldetag: 03.11.2009
(51) Int. Cl.: B03D 1/24, D21F 1/70, B01F 3/04, B01F 5/06, D21B 1/32, B01F 5/04

(54) **Verfahren zur Entfernung von Feststoffen aus einer Fasersuspension durch Flotation sowie Flotationsvorrichtung zu seiner Durchführung**

(30) Priorität: 18.12.2008 DE 102008063780
(71) Anmelder: Voith Patent GmbH, 89522 Heidenheim (DE)
(72) Erfinder: Respondek, Peter, 88213 Ravensburg (DE); Störzer, Martin, 88289 Waldburg (DE); Dreyer, Axel, 88279 Amtzell (DE)

(57) **Zusammenfassung**

Das Verfahren dient zur Entfernung von Feststoffen durch Flotation aus einer Fasersuspension (S), wobei die Fasersuspension (S) in mehreren Teilströmen (7, 8) durch Strömungskanäle (9, 10) mindestens einer Mischvorrichtung (1) geleitet wird, und wobei Gas (6) zugeführt wird. Die begaste Fasersuspension (S') gelangt in einen Flotationsbehälter (3). Erfindungsgemäß wird mindestens einem Teilstrom (8) eine deutlich geringere Menge Gas (6) zugeführt wird als mindestens einem anderen Teilstrom (7). Dadurch kann der Energieverbrauch des Verfahrens deutlich gesenkt werden.

## Beschreibung

Die Erfindung betrifft ein Verfahren zur Entfernung von Feststoffen gemäß dem Oberbegriff des Anspruchs 1.

Durch Flotation wird ein auszuscheidende Stoffe enthaltender Schaum oder Schwimmschlamm gebildet. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so dass sie sich ausflotieren lassen. Dabei wird in der Fasersuspension oft eine Faserstoffdichte (Fasermenge bezogen auf die Gesamtmenge) eingestellt, die zwischen 0,5 % und 2 % liegt, vorzugsweise zwischen 0,8 % und 1,2 %. Der hier beschriebene Flotationsvorgang nutzt die Unterschiede zwischen Papierfaserstoff und auszuscheidenden Feststoffen, insbesondere von unerwünschten Störstoffteilchen in der Art, dass der Faserstoff auf Grund seines eher hydrophilen Charakters in der Fasersuspension verbleibt, während die angesprochenen Störstoffteilchen hydrophob sind und deshalb zusammen mit den Luftblasen in den Schaum gelangen. Dabei werden also nicht alle Feststoffe ausflotiert, sondern Fasern von Verunreinigungen getrennt. Der oft benutzte Begriff "Flotationsdeinking" wird in der Regel nicht nur für die Entfernung von Druckfarbenpartikeln (ink = Druckfarbe), sondern auch allgemeiner für die Flotation von feinen Verunreinigungen aus Faserstoffsuspensionen verwendet. Solche Stoffe sind insbesondere Kleber, feine Kunststoffpartikel und eventuell auch Harze.

Der Stand der Technik bezüglich Flotationsverfahren für Faserstoffsuspensionen ist bereits sehr weit fortgeschritten. Daher gibt es Lösungen, welche durchaus geeignet sind, Feststoffpartikel in der gewünschte Art und Menge durch Flotation zu entfernen. Allerdings werden gute Flotationsergebnisse mit einem relativ hohen Energieverbrauch erkauft, der durch Zumischung und Verteilung des Flotationsgases (im Allgemeinen: Luft) entsteht. Dabei wird die Suspension auf eine hohe Strömungsgeschwindigkeit gebracht und das Gas nach dem Injektorprinzip angesaugt. Außerdem müssen Gasblasen erzeugt, möglichst gleichmäßig in der Suspension verteilt und mit den auszuflotierenden Feststoffteilchen in Kontakt gebracht werden.

Die DE 31 20 202 A1, beschreibt einen Injektorapparat bei dem eine Ansaugung von Luft aus dem Inneren der Flotationszelle erfolgt sowie die Bildung von zur Flotation benötigten Luftblasen.

Der Erfindung liegt die Aufgabe zu Grunde, Wirtschaftlichkeit und Effektivität des Verfahrens weiter zu verbessern.

Diese Aufgabe wird durch die im Anspruch 1 genannten Merkmale gelöst.

Die Unteransprüche 30 und 31 beschreiben vorteilhafte Vorrichtungen zur Durchführung des Verfahrens.

Die Erfindung geht davon aus, dass ein großer Teil der für das Verfahren benötigten Energie aus dem Druckverlust herrührt, der in der Mischvorrichtung auftritt. Der Druck muss von den Pumpen erzeugt werden, die die zu begasende Fasersuspension in die jeweilige Mischvorrichtung fördern. Wird bei einem Teilstrom keine oder nur eine geringe direkte Begasung vorgenommen, so kann dieser Teilstrom mit geringem Druckverlust durch die Mischvorrichtung geführt werden, was eine Energieeinsparung an den Pumpen zwischen 20% und 60% bedeuten kann. Dabei ist die größte Energieeinsparung zu erwarten, wenn mindestens ein Teilstrom gar nicht begast wird. Es ist aber auch ein reduzierter Spareffekt denkbar, wenn ein Teilstrom nur geringer begast wird als die anderen, wobei z. B. mit einer um 50% kleineren Gasmenge bezogen auf den Mengendurchsatz des Teilstromes, also einer um 50% reduzierten Luftbeladung.

Zur Energiebetrachtung ist anzumerken, dass übliche Flotationsanlagen mehrere, z.B. 12 Flotationsvorrichtungen umfassen, die jeweils mit einer Pumpe beschickt werden.

Der gering begaste oder unbegaste Teilstrom lässt sich anschließend mit den übrigen stärker begasten Teilströmen vermischen. Dadurch wird der gering begaste oder unbegaste Teilstrom mit Gasblasen aus den übrigen Teilströmen versehen, was hier als indirekte Begasung bezeichnet wird. Dabei können z. B. unterschiedliche Strömungsgeschwindigkeiten von zu vermischenden Teilstrahlen förderlich sein. Das Vermischen kann vorzugsweise innerhalb der Mischvorrichtung, aber auch außerhalb, also im Flotationsbehälter vorgenommen werden.

Die Erfindung und ihre Vorteile werden erläutert an Hand von Zeichnungen. Dabei zeigen:
- Fig. 1: eine Flotationszelle zur Durchführung des erfindungsgemäßen Verfahrens;
- Fig. 2: Schnitt durch eine Mischvorrichtung;
- Fig. 3-6: jeweils Varianten zur Vermischung verschiedener Teilströme miteinander;
- Fig. 7-9: Ansichten von verschiedenen Einlaufteilen von Mischvorrichtungen.

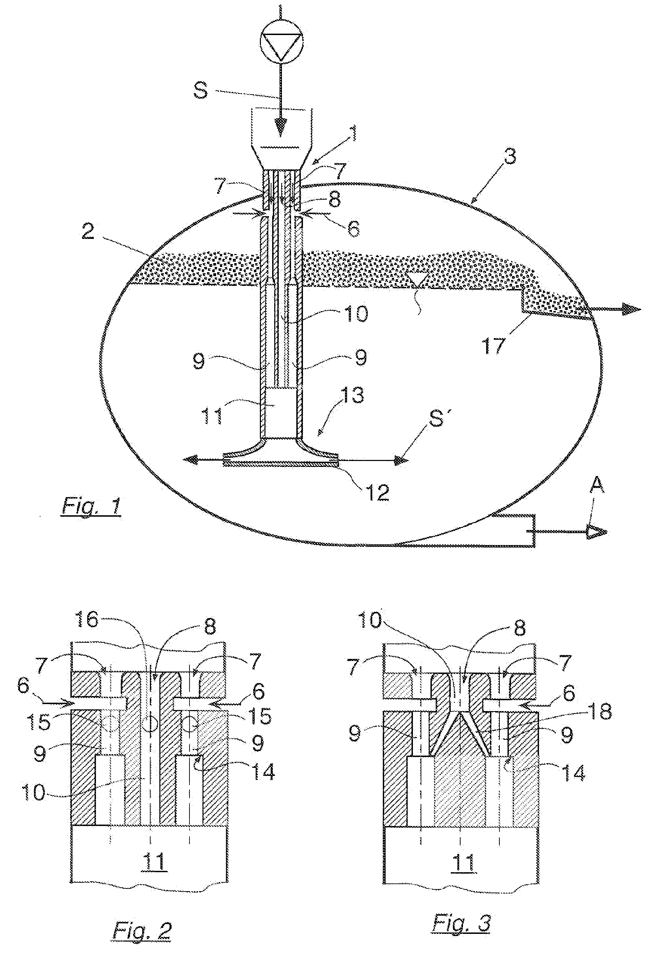

In Fig. 1 ist der Schnitt durch einen Flotationsbehälter 3 mit ovalem Querschnitt dargestellt, einer Form, die sich als besonders günstig erwiesen hat. Die Fasersuspension S wird unter einem Druck, der über dem der Umgebung liegt, in die Mischvorrichtung 1 eingepumpt. Mit Vorteil ist die Mischvorrichtung 1 exmittig im Flotationsbehälter 3 angeordnet und taucht in die belüftete Fasersuspension S' ein. Sie ist so gestaltet, dass in ihr mehrere Teilströme 7 und 8 gebildet und durch Strömungskanäle 9 und 10 geführt werden, die vorzugsweise runde Querschnitte aufweisen. Dabei wird von den außen liegenden Teilströmen 7 das Gas 6 durch Injektionswirkung angesaugt und mit der Fasersuspension S vermischt. Zu diesem Zweck sind die Strömungskanäle 9 teilweise geöffnet, so dass sich hier ein örtlich begrenzter Freistrahl der Fasersuspension ausbildet. Das Gas 6 kann aus dem Flotationsbehälter 3 oberhalb des Flotationsschaumes 2 direkt entnommen werden. Zum mittleren Teilstrom 8 hingegen hat das Gas 6 keinen direkten Zutritt, weshalb hier diesem Teilstrom 8 kein Gas 6 zugeführt wird.

Die Strömungskanäle 9 und 10 münden in eine Mischkammer 11, die noch in der Mischvorrichtung 1 liegt und in der sich alle Teilströme 7 und 8 wieder vermischen. Die Mischkammer 11 endet stromabwärts in einem Umlenkdiffusor 13, in dem eine Umlenkung der begasten Suspension um etwa 90 grad in die Waagerechte und eine Verteilung auf den ganzen Umfang (360 grad) erfolgt. Der Umlenkdiffusor 13 umfasst ein Umlenkteil , das mit einer Abschlussscheibe 12 zusammenwirkt. Dadurch wirkt der Umlenkdiffusor 13 auch als Pralldiffusor, was die Vermischung der Fasersuspension weiter begünstigt.

Der feststoffhaltige Flotationsschaum 2 wird in einer Schaumrinne 17 gesammelt und entsorgt, weiterverarbeitet oder dem Flotationsbehälter einer weiteren Flotationsstufe (nicht dargestellt) zugeführt. Die durch Flotation gereinigte Fasersuspension, also der Gutstoff A wird hier aus dem unteren Teil des Flotationsbehälters 3 abgeführt, der entweder in einer weiteren Flotatioszelle erneut flotiert oder in den nächsten Prozessschritt geführt wird.

Fig. 2 zeigt den Schnitt durch ein Mischrohr 1. Ähnlich wie in Fig.1 sind die drei Strömungskanäle 9 und 10 zu sehen, die in der Schnittebene liegen. Im Einlaufteil 23 der Mischvorrichtung 1 kann die zufließende Fasersuspension S in Teilströme 7 und 8 aufgeteilt werden. Die Teilströme 7 durchströmen als Freistrahlen einen offenen Bereich, zu dem das Gas 6 zutritt hat und werden dann in den Strömungskanälen 9 weitergeführt. Die Vermischung der Suspension mit Gasblasen und das Anlagern der Feststoffe an die Gasblasen kann durch Erweiterung des Strömungsquerschnittes in den der Begasung folgenden Strömungskanälen 9 weiter verbessert werden. So ist hier in den Strömungskanälen 9 jeweils eine sprunghafte Erweiterungen 14 (Stufensprung) vorhanden, die zu lokal begrenzten Wirbeln führt. Diese Wirbel erhöhen zwar den Druckverlust und damit den Energiebedarf des Verfahrens, liefern aber insbesondere die zum Zerkleinern von zu groß geratenen Gasblasen und/oder die zum Anlagern der Störstoffe an die Gasblasen benötigte Energie. Je nach Bedarf können auch mehrere Stufensprünge in einem Strömungskanal von Vorteil sein. Solche Erweiterungen können beim nicht begasten Teilstrom 8 entfallen.

Im Normalfall hat der nicht begaste Teilstrom 8 im Strömungskanal 10 wegen des geringeren Druckverlustes eine höhere Strömungsgeschwindigkeit als die begasten Teilströme 7 im Strömungskanal 9. Das hat zur Folge, dass er mit Vorteil als Treibstrahl bei der Vermischung mit benachbarten langsameren Teilströmen wirkt.

Die Strömungsquerschnitte 15 und 16 der Strömungskanäle 9 und 10 (vor evt. vorhandener Erweiterungen 14) sind in Fig. 2 um 90 ° gedreht eingezeichnet. Sie können gleich oder auch zur Erzielung besonderer Effekte unterschiedlich sein. Wird z. B. eine Anhebung der Strömungsgeschwindigkeit und/oder eine größere Menge des nicht begasten Teilstroms 8 als Vorteil angesehen, kann dessen Strömungsquerschnitt 15 vergrößert werden. Umgekehrt kann auch ein begaster Teilstrom mit höherer Geschwindigkeit versehen werden und als Treibstrahl dienen.

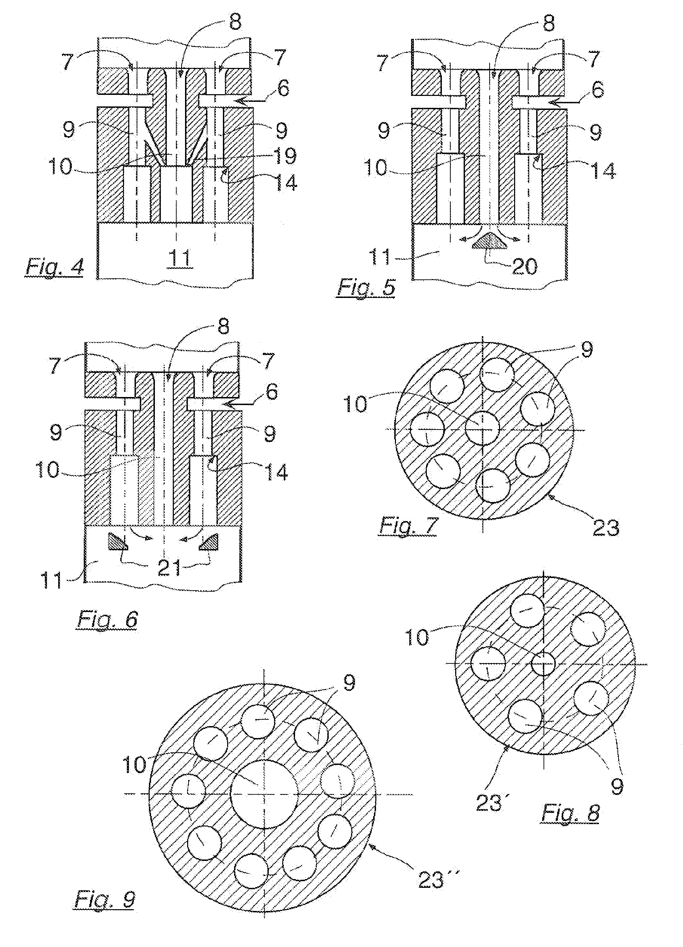

Die Zusammenführung der unterschiedlichen Teilströme 7 und 8 kann auch durch Querverbindungen 18 zwischen den Strömungskanälen 9 und 10 vorgenommen werden, wie in Fig. 3 dargestellt. Mit Vorteil mündet eine solche Querverbindung 18 an einer sprunghaften Erweiterung 14 eines einen begasten Teilstrom 7 führenden Strömungskanals 9. Andere Querverbindungen 19 können begaste Teilströme 7 in unbegaste Teilströme 8 leiten (s. Fig. 4).

Eine weitere Möglichkeit, die Vermischung unterschiedlicher Teilströme zu fördern, zeigt Fig. 5. Bei dieser Ausführungsform dienen Strömungseinbauten 20 am Auslauf aus den Strömungskanälen 9 und 10 dazu, einen Teilstrom, hier: den nicht begasten Teilstrom 8, aufzuteilen und andern Teilströmen 7 zuzuführen. Mit ähnlichen Strömungseinbauten 21 können auch begaste Teilströme 7 mit unbegasten Teilströmen 8 zusammengebracht werden (s. Fig.6).

Der in Fig. 7 geschnitten dargestellte Einlaufteil 23 einer Mischvorrichtung 1 zeigt ein Beispiel mit insgesamt acht Teilströmen pro Mischvorrichtung. Dabei sind der nicht oder gering begaste Teilstrom 8 zentral und die übrigen sieben Teilströme 7 peripher angeordnet. Das ist von Vorteil, da das Gas 6 von außen leichter zuströmen kann. Die kleinsten Strömungsquerschnitte des jeweiligen Strömungskanals liegen hier in der Schnittebene und sind hier gleich gehalten. Wenn es angestrebt wird, die Menge des nicht oder gering begasten Teilstromes 8 zu reduzieren kann der entsprechende Strömungsquerschnitt im Einlaufteil 23' kleiner gemacht werden (s. Fig. 8). Anders ist es gemäß Fig. 9 mit einem größeren Strömungsquerschnitt im Einlaufteil 23" für den mittleren Teilstrom 8. Die Abstimmung der Strömungsquerschnitte beeinflusst das Mengenverhältnis zwischen der direkt begasten Fasersuspension und der erst später mit Luftblasen vermischten also indirekt begasten Fasersuspension. Bei dieser Betrachtung kann auch die Anzahl der begasten und nicht oder gering begasten Teilströme pro Mischvorrichtung mit herangezogen werden. Der volumetrische Anteil der nicht direkt begasten Suspensionsmenge ist mit Vorteil mindestens 10% der gesamten durch die Mischvorrichtung geführten Suspension.

Bei Flotationsanlagen, die das erfindungsgemäßen Verfahren zur Entfernung von Störstoffen nutzen, durchströmt die Fasersuspension zumeist mehrere zu einer Flotationsstufe gehörende Flotationsbehälter 3 nacheinander bis der geforderte Weißgrad erreicht ist. Da der Flotationsschaum, der bei einer einzigen Flotationsstufe gebildet wird, in den meisten Fällen noch einen beträchtlichen Anteil von Papierfasern enthält, werden Verfahren dieser Art oft mit mehreren Flotationsstufen durchgeführt, wobei der Überlauf, also der Flotationsschaum, der stromaufwärtigen Stufe als Einlauf in die nächste Stufe geführt wird. Üblicherweise spricht man dann von einer ersten und zweiten Flotationsstufe oder auch von Primär- und Sekundärflotation. Der Durchlauf der zweiten Flotationsstufe kann dem Zulauf der ersten Flotationsstufe wieder zugegeben werden. Es gibt auch Fälle, in denen der Durchlauf der zweiten Stufe dem Durchlauf der ersten Stufe zugemischt wird. Flotationsvorrichtungen für die zweite Flotationsstufe sind zumeist ähnlich oder gleich aufgebaut wie die für die erste Stufe.

## Patentansprüche

1. Verfahren zur Entfernung von Feststoffen mit Hilfe von Gasblasen (4) aus einer Faserstoffsuspension (S), wobei die Faserstoffsuspension (S) in mindestens einer Mischvorrichtung (1) in Form mehrerer Teilströme (7) durch Strömungskanäle (9, 10) geführt wird, wobei Gas (6) zugeführt wird, und wonach die begaste Suspension (S') aus der Mischvorrichtung (1) in einen Flotationsbehälter (3) geführt wird, Feststoffe aus der Faserstoffsuspension (S) in einem Flotationsschaum (2) gesammelt und mit diesem abgeführt werden,
**dadurch gekennzeichnet,**
**dass** mindestens einem Teilstrom (8) eine geringere Menge Gas (6) zugeführt wird als mindestens einem anderen Teilstrom (7), jeweils auf die volumetrische Menge des Teilstromes (7, 8) bezogen.

2. Verfahren nach Anspruch 1,
**dadurch gekennzeichnet,**
**dass** mindestens einem Teilstrom (8) kein Gas (6) zugeführt wird.

3. Verfahren nach Anspruch 1 oder 2,
**dadurch gekennzeichnet,**
**dass** aus der Fasersuspension (S) nach dem Eintritt in die Mischvorrichtung (1) aus mindestens einem Teilstrom (7) ein Freistrahl gebildet wird, so dass durch Injektionswirkung das Gas (6) angesaugt wird und sich mit der Fasersuspension (S) vermischt.

4. Verfahren nach einem der voran stehenden Ansprüche,
**dadurch gekennzeichnet,**
**dass** in einer Mischvorrichtung (1) mindestens drei, vorzugsweise sechs bis zwölf Teilströme (7, 8) gebildet werden.

5. Verfahren nach Anspruch 4,
**dadurch gekennzeichnet,**
**dass** die Teilströme (7, 8) mit einer Toleranz von plus oder minus 10% mit gleichem volumetrischen Mengenstrom gebildet werden.

6. Verfahren nach Anspruch 4,
**dadurch gekennzeichnet,**
**dass** Teilströme (7, 8) mit um mindestens 10% differierendem volumetrischen Mengenstrom gebildet werden.

7. Verfahren nach Anspruch 6,
**dadurch gekennzeichnet,**
**dass** der volumetrische Mengenstrom mindestens eines geringer oder nicht begasten Teilstromes (7) größer eingestellt wird als die stärker begasten Teilströme (8).

8. Verfahren nach einem der voran stehenden Ansprüche,
**dadurch gekennzeichnet,**
**dass** der volumetrische Mengenstrom des geringer oder nicht begasten Teilstromes (8) mindestens 10 %, vorzugsweise mindestens 15 % und höchstens 60 %, aller durch die Mischvorrichtung (1) geführten Teilströme (7, 8) umfasst.

9. Verfahren nach Anspruch 6,
**dadurch gekennzeichnet,**
**dass** der volumetrische Mengenstrom mindestens eines geringer oder nicht begasten Teilstromes (7) kleiner eingestellt wird als die stärker begasten Teilströme (8).

10. Verfahren nach einem der voran stehenden Ansprüche,
**dadurch gekennzeichnet,**
**dass** die Teilströme (7, 8) nach Austritt aus den Strömungskanälen (9, 10) in eine innerhalb der Mischvorrichtung (1) angeordnete Mischkammer (11) geführt werden.

11. Verfahren nach einem der voran stehenden Ansprüche,
**dadurch gekennzeichnet,**
**dass** die Teilströme (7, 8) nach Austritt aus den Strömungskanälen (9, 10) wieder zusammengeführt werden.

12. Verfahren nach einem der voran stehenden Ansprüche,
**dadurch gekennzeichnet,**
die Strömungsgeschwindigkeit der Teilströme (7, 8) beim Austritt aus den Strömungskanälen (9, 10) mit einer Toleranz von plus oder minus 10% gleich eingestellt wird.

13. Verfahren nach einem der Ansprüche 1 bis 11,
**dadurch gekennzeichnet,**
**dass** sich die Strömungsgeschwindigkeit der Teilströme (7, 8) beim Austritt aus den Strömungskanälen (9, 10) um mindestens 10%, vorzugsweise mindestens 20% unterscheidet.

14. Verfahren nach Anspruch 13,
**dadurch gekennzeichnet,**
**dass** die Strömungsgeschwindigkeit mindestens eines geringer oder nicht begasten Teilstromes (7) größer eingestellt wird als die der stärker begasten Teilströme (8).

15. Verfahren nach Anspruch 13,
**dadurch gekennzeichnet,**
**dass** die Strömungsgeschwindigkeit mindestens eines geringer oder nicht begasten Teilstromes (7) kleiner eingestellt wird als die der stärker begasten Teilströme (8).

16. Verfahren nach einem der voran stehenden Ansprüche,
**dadurch gekennzeichnet,**
**dass** benachbarte Strömungskanäle (9, 10) so miteinander verbunden sind, dass sich benachbarte unterschiedlich begaste Teilströme (7, 8) miteinander vermischen.

17. Verfahren nach einem der Ansprüche 11 bis 16,
**dadurch gekennzeichnet,**
**dass** durch Strömungseinbauten (20, 21) die Vermischung der zusammengeführten Teilströme (7, 8) verstärkt wird.

18. Verfahren nach einem der voran stehenden Ansprüche,
**dadurch gekennzeichnet,**
**dass** die begasten Teilströme (7) im Strömungskanal (9) durch mindestens eine Erweiterung (14) des Strömungsquerschnittes auf eine um mindestens 15%, vorzugsweise mindestens 30% geringere mittlere Strömungsgeschwindigkeit gebracht wird.

19. Verfahren nach Anspruch 18,
**dadurch gekennzeichnet,**
**dass** mindestens eine Erweiterung (14) des Strömungsquerschnittes sprunghaft erfolgt.

20. Verfahren nach Anspruch 18 oder 19,
**dadurch gekennzeichnet,**
**dass** mindestens eine Erweiterung des Strömungsquerschnittes stetig erfolgt.

21. Verfahren nach Anspruch 18, 19 oder 20,
**dadurch gekennzeichnet,**
**dass** im den geringer oder nicht begasten Teilstrom (8) führenden Strömungskanal (10) keine sprunghafte Erweiterung (14) vorhanden sind.

22. Verfahren nach Anspruch 18, 19, 20 oder 21,
**dadurch gekennzeichnet,**
**dass** im den geringer oder nicht begasten Teilstrom (8) führenden Strömungskanal (10) keine stetige Erweiterung vorhanden sind.

23. Verfahren nach einem der voran stehenden Ansprüche,
**dadurch gekennzeichnet,**
**dass** die begaste Fasersuspension (S') über einen Umlenkdiffusor (13) aus der Mischvorrichtung (1) in den Flotationsbehälter (3) herausgeführt wird.

24. Verfahren nach einem der voran stehenden Ansprüche,
**dadurch gekennzeichnet,**
**dass** das zur Flotation verwendete Gas (6) zu mindestens 80% vorzugsweise mindestens 90% das innerhalb eines zur Durchführung des Verfahrens verwendeten vorzugsweise geschlossenen Flotationsbehälters (3) freigewordene Gas ist.

25. Verfahren nach einem der voran stehenden Ansprüche,
**dadurch gekennzeichnet,**
**dass** in der Fasersuspension (S) bei der Zugabe von Gas (6) eine Faserstoffdichte zwischen 0,5 % und 2%, vorzugsweise zwischen 0,8 % und 1,2 % eingestellt wird.

26. Verfahren nach einem der voran stehenden Ansprüche,
**dadurch gekennzeichnet,**
die Mischvorrichtung (1, 1') in die sich im Flotationsbehälter (3) befindende Fasersuspension (S') eintaucht.

27. Verfahren nach einem der voran stehenden Ansprüche,
**dadurch gekennzeichnet,**
**dass** die Fasersuspension zumindest teilweise aus Altpapier hergestellt wird, und dass die zu entfernenden Feststoffe Störstoffe sind.

28. Verfahren nach einem der voran stehenden Ansprüche,
**dadurch gekennzeichnet,**
**dass** Strömungskanäle (9, 10) verwendete werden, deren Strömungsquerschnitt (15, 16 ) kreisförmig ist.

29. Verfahren nach einem der voran Ansprüche 1 bis 27,
**dadurch gekennzeichnet,**
**dass** Strömungskanäle (9, 10) verwendete werden, deren Strömungsquerschnitt (15, 16 ) eine vom Kreis abweichende Form hat.

30. Flotationsvorrichtung zur Durchführung des Verfahrens nach einem der voran stehenden Ansprüche, welche einen Flotationsbehälter (3) mit mindestens einer von einer Fasersuspension (S) durchströmbaren Mischvorrichtung (1) zur Zuführung von Gas (6) aufweist, in der eine Aufteilung der Fasersuspension in mehrere Teilströme (7, 8) erfolgt, die durch Strömungskanälen (9, 10) geführt werden, und danach aus der Mischvorrichtung (1) in den Flotationsbehälter (3) gelangen können,
**dadurch gekennzeichnet,**
**dass** mindestens ein Strömungskanal (10) von der Zuführung des Gases (6) teilweise oder ganz abgeschnitten ist.

31. Flotationsvorrichtung nach Anspruch 30,
**dadurch gekennzeichnet,**
**dass** ein Teil der Strömungskanälen (9) mit sprunghaften Erweiterungen (14) versehen ist und mindestens ein von der Zuführung des Gases (6) teilweise oder ganz abgeschnittener Strömungskanal (10) nicht.
